# EUROPEAN PATENT SPECIFICATION

(11) **EP 3 350 908 B1**
(45) Date of publication and mention of the grant of the patent: **26.04.2023**
(21) Application number: 16728757.2
(22) Date of filing: 12.05.2016
(51) Int. Cl.: H02K 21/02, H02K 5/173

(54) **RADIAXIAL FLUX MOTOR WITH A CONICAL STATOR AND ROTOR**
RADIAXIALFLUSSMOTOR MIT EINER KONISCHEN STATOR-ROTOR-ANORDNUNG
MOTEUR À FLUX RADIAXIAL AYANT UN ENSEMBLE STATOR ET ROTOR CONIQUE

(43) Date of publication of application: 25.07.2018
(73) Proprietor: Ozyegin Universitesi, 34794 Cekmekoy/Istanbul (TR)
(72) Inventor: DEMIR, Ugur, Nilufer/Bursa (TR); AKUNER, M. Caner, Istanbul (TR)
(74) Representative: Sevinç, Erkan
(86) International application number: PCT/TR2016/050140
(87) International publication number: WO 2017/196269

(56) References cited:
- EP-A2- 0 906 842
- JP-A- 2008 301 666
- JP-A- 2013 162 677
- US-A- 4 743 813
- US-A- 5 140 212

## Description

### Technical Field

The present disclosure relates to electric motors, and in particular to a radial and axial flux motor with a conical stator and a conical rotor, and a method of operating the same.

### Background

Electric motors and generators have a stationary element, termed a stator, and movable or rotating elements termed the rotor. The interaction between the stator and the rotor is caused by the interaction on a magnetic field generated by either the stator or the rotor. The forces imparted on the rotor are a function of the interaction of the stator and the rotor magnetic fields and the moment arm of the rotor calculated by the radial displacement of the magnetic field of the rotor with respect to the axis of the rotor.

A magnetic field is usually generated or inducted by electric currents in a metal winding placed in either the stator or the rotor or both. Such stator winding usually comprises a plurality of coils wound around a winding support. The winding support is usually comprised of a soft magnetic material which traditionally is made of laminations of selected steel (ferro magnetic) materials. The laminations are insulated from each other in order to reduce eddy currents.

For example document JP2013162677 discloses a motor having a conical stator with a fixed shaft and a drum shaped rotor surrounding the stator and having two conical disc walls, one of said conical walls being disposed at each side of the stator and a cylindrical surrounding wall surrounding the stator and being affixed at both axial ends to the conical disc walls. Said disks are supported on the fixed shaft by roller bearings to allow rotational movement of the rotor about the shaft. Said discs comprise magnets and the stator comprises windings. The motor is used for driving a wheel, wherein the cylindrical wall suspends a tyre.Another motor for driving a wheel tyre is disclosed in EP 0 906 842 A2.

Prior motors, in particular induction motors, have had several disadvantages. Prior motors use a significant amount of air space and can be large and heavy when assembled, making shipping of an electric motor costly. Further, prior symmetricallyshaped cylindrical motors do not maximize the available space for the stator and/or rotor to improve performance by optimizing the interaction between the electromagnetic field of the stator and the rotor.

Thus, there is a need to improve the torque, power, speed, efficiency, and use of electric motors, which are becoming more and more in demand.

### Summary

The present invention addresses prior disadvantages and problems by providing for advantageous conical geometry of a stator and a rotor, thereby providing both radial flux and axial flux ("radiaxial" flux) simultaneously. Advantageously, the present invention maximizes and/or optimizes the radial space available in order to advantageously use the increased radial dimension of a conical design to increase the moment arm to increase available torque at the drive shaft of the motor. Furthermore, the present invention provides for increased efficiency, torque-speed, and improved space utilization for a motor.

In accordance with an embodiment of the present invention, a radiaxial flux electric motor is provided. The electric motor includes a shaft having a rotor end and a fixed end; a conical rotor rotatably coupled to the shaft adjacent the rotor end, a conical stator coupled to the shaft between the conical rotor and the fixed end; with a substantially parallel and concentric conical geometry of the rotor and the stator, wherein the conical rotor includes a roller bearing, a rotor core and one of a squirrel cage or a plurality of magnets, wherein the rotor core includes a conical interior region with a base adjacent to the shaft and radially outwards a base of a cylindrical surrounding wall extending in the axial direction such that a top portion of the surrounding wall surrounds the stator, wherein the top portion mounts the roller bearing; wherein the conical stator is operably coupled to the conical rotor by the roller bearing along the surrounding wall; the conical stator including metal windings for flow of an electric current, wherein the conical rotor is configured for rotational movement about a lengthwise axis of the shaft while the conical stator and the shaft are stationary with a conical air gap allowed by the surrounding wall between the conical rotor and the conical stator; wherein by the conical geometry of the stator and the rotor a radiaxial flux comprising both radial flux and axial flux simultaneously is provided between the conical stator and the conical rotor, when electrical current is provided to said metal windings.

The following various example descriptions and components of the electric motor can be alternatives which may be combined in various applicable and functioning combinations within the scope of the present invention. In one example, the conical rotor may be rotatably coupled to the shaft by a bearing, and the conical stator may be coupled to the shaft by a wedge. In one example, the bearing and the wedge are each generally tubular in shape for coupling to the shaft. In one example, the fixed end of the shaft includes screw threads for coupling to a power train including a transmission, drive shafts, and differentials. In one example, the conical rotor and the conical stator are each tapered toward the fixed end. Alternatively, the conical rotor and the conical stator are each tapered toward the rotor end. In one example, the conical rotor and the conical stator are concentric about the lengthwise axis of the shaft. In one example, the conical rotor includes a conical interior region and a surrounding wall, the surrounding wall mounting the roller bearing. In one example, the air gap distance between the conical rotor and the conical stator is between about 1 mm and about 3 mm. In one example, each of the conical rotor and the conical stator has a base between about 200 mm to about 750 mm. In one example, each of the conical rotor and the conical stator has a height between about 145 mm and about 325 mm. In one example, each of the conical rotor and the conical stator has a ratio of base to height between about 1.3 and about 2.4. In one example, the electric motor may further comprise a cover over the conical rotor and the conical stator. In one example, the electric motor may further comprise a power supply operably coupled to the metal windings for providing the electric current.

In accordance with another embodiment of the present invention, an electric vehicle is provided. The electric vehicle includes a radiaxial flux electric motor as described above, and the fixed end of the shaft is operably coupled to at least one powertrain component of the electric vehicle.

In accordance with yet another embodiment of the present invention, a method for operating a radiaxial flux electric motor is provided. The method includes providing a radiaxial flux electric motor as described above, providing an electric current to the metal windings in the conical stator, and producing a radiaxial magnetic flux between the conical stator and the conical rotor. In further embodiments, the method may further include providing a torque force on the conical rotor to thereby rotate the conical rotor, and rotatably moving a tire coupled to the conical rotor.

### Description of the Figures

An electric motor, and a method for operating an electric motor according to the invention and some particular embodiments thereof will be described with reference to the following figures.

These and other features, aspects, and advantages of the present invention will become better understood when the following detailed description is read with reference to the accompanying drawings in which like characters represent like parts throughout the drawings. Unless noted, the drawings may not be drawn to scale.
FIGS. 1A and 1B show a perspective view and a top view, respectively, of an electric motor according to embodiments of the present invention.
FIG. 2 illustrates an exploded assembly view of the electric motor of FIGS. 1A and 1B according to embodiments of the present invention.
FIG. 3 illustrates a sectional side view along line I - I of FIG. 1B according to an embodiment of the present invention.
FIG. 4 illustrates an exploded assembly view of an electric motor according to other embodiments of the present invention.
FIG. 5 illustrates a sectional side view along line II - II of FIG. 4 according to an embodiment of the present invention.
FIG. 6 illustrates a flowchart of a method of operating an electric motor according to an embodiment of the present invention.

### Description of Embodiments

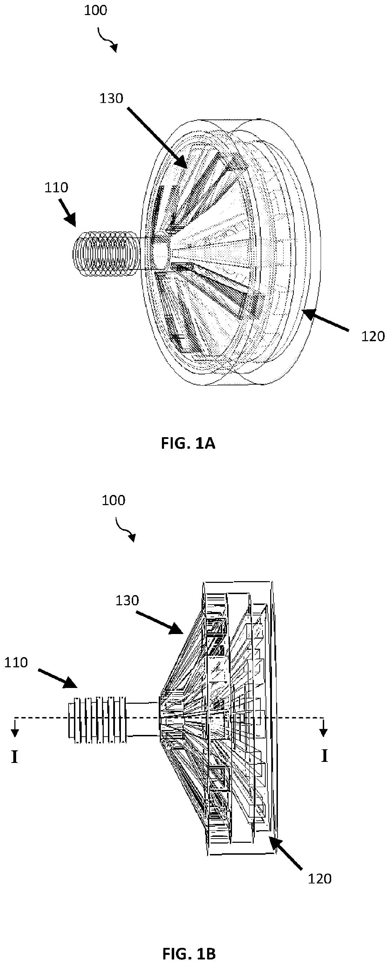

Referring now to the figures, according to a general embodiment of the invention, FIGS. 1A and 1B illustrate a perspective view and a top view, respectively, of an assembled radiaxial flux electric motor 100 according to embodiments of the present invention. Electric motor 100 includes a shaft 110 having fixed end and a rotor end, a conical rotor 120 adjacent the rotor end of the shaft 110, and a conical stator 130 between the rotor 120 and the fixed end of the shaft 110.

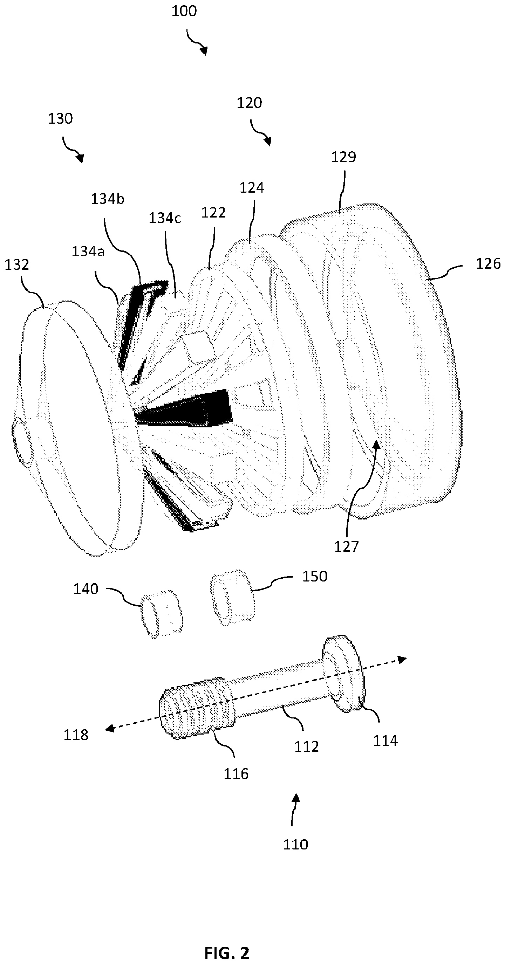

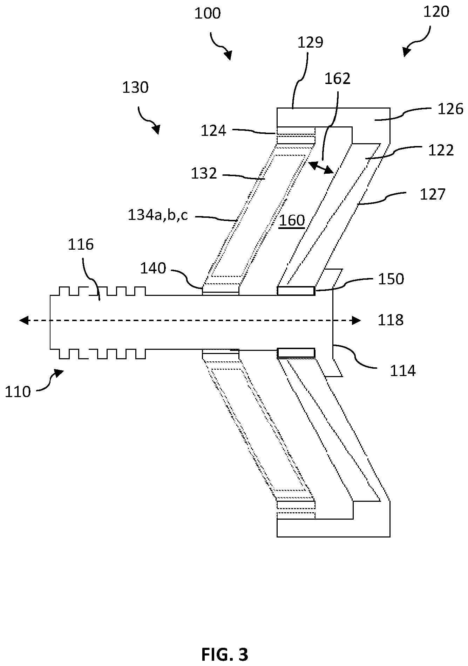

FIG. 2 illustrates an assembly view of the electric motor 100 of FIGS. 1A and 1B according to embodiments of the present invention. FIG. 3 illustrates a sectional side view of electric motor 100 along line I - I of FIG. 1B according to an embodiment of the present invention.

According to an embodiment, electric motor 100 includes shaft 110 having a shaft portion 112, a rotor end 114, and a fixed end 116. Generally, shaft 110 is tubular in shape with a circular cross section and has an axis of rotation 118 which runs centrally lengthwise along the shaft 110. Shaft 110 allows for joining of the fixed end 116 to a powertrain and a rotational axis for conical rotor 120 to rotate about. In one example, rotor 120 rotates adjacent to or approximate to rotor end 114, which includes a tab or flange in one example, for maintaining a position of the rotor 120. In a further example, fixed end 116 of shaft 110 includes screw threads for fixedly attaching to a powertrain component, such as a transmission, a drive shaft, and/or a differential. Other means for operably coupling the fixed end 116 to a powertrain component are within the scope of the present invention. Shaft 110 may be produced at least in part by machining, in one example. Shaft 110 may be comprised of steel, in one example.

Conical rotor 120 is rotatably coupled to shaft 110 adjacent the rotor end 114, the conical rotor 120 including a squirrel cage 122, a roller bearing 124, and a rotor core 126. Squirrel cage 122 has a conical geometry and may be produced at least in part by machining and rolling, in one example, and is comprised of steel with aluminium or copper conductors embedded in its surface, in one example. The conductors on the squirrel cage 122 may be solid bar windings (i.e., a single wire winding). The number of windings on the squirrel cage 122 may determine to what extent the induced currents are fed back to the stator core, and hence the current through them. The squirrel cage 122 is positioned on rotor core 126. Squirrel cage 122 allows for rotational motion of rotor core 126 as rotor core 126 interacts with stator core 130. Roller bearing 124 is placed inside the rotor core 126, in one example, as further described below.

Rotor core 126 includes a conical interior region 127 with a base adjacent and a base of a cylindrical surrounding wall 129, a top portion of the surrounding wall 129 mounting the roller bearing 124, which eventually mounts stator core 132. Thus, surrounding wall 129 of rotor core 126 allows for an air gap between the rotor and the stator. Squirrel cage 122 is positioned on the conical interior region 127 within the surrounding wall 129 of rotor core 126 in one example, and may be placed within a groove on the interior region 127 surface. The conical geometry of squirrel cage 122 and interior region 127 are concentric about shaft 110. Rotor core 126 allows for the flow of magnetic flux, and in one example may be comprised of steel or silicon steel, and may be produced at least in part by laser cutting and pressing.

Rotor core 126 is coupled to the shaft 110 by a bearing 150 adjacent rotor end 114 of shaft 110. In one example, the bearing 150 is generally tubular in shape for coupling to the shaft 110 and for constraining relative motion of the rotor core 126 to a desired motion, which in one example is rotational motion about axis 118 adjacent to rotor end 114 of shaft 110. Bearing 150 also reduces friction between parts, such as shaft 110 and moving conical rotor 120.

Conical stator 130 is fixedly coupled to the shaft 110 between the conical rotor 120 and the fixed end 116. Conical stator 130 is operably coupled to the conical rotor 120 by roller bearing 124 along surrounding wall 129. Conical stator 130 is fixedly coupled to shaft 110 by a wedge 140, which is generally tubular in shape in one example, and is comprised of steel or plastic, in one example. Wedge 140 may be placed in between shaft 110 and the stator core, in one example. The conical stator 130 includes a stator core 132 which allows the flow of magnetic flux, and metal windings 134a, 134b, 134c (also referred to as 134a,b,c) for flow of an electric current. Metal windings 134a-c are wound on stator core 132 by a coil winding machine or manually, in one example. Stator core 132 may be produced at least in part by laser cutting and pressing, in one example, and may be comprised of steel or silicon steel, in one example. Roller bearing 124 constrains relative motion to the desired motion of the stator core 132 and metal windings, which in one example is rotational motion about axis 118 of shaft 110 between rotor core 126 and fixed end 116. Roller bearing 124 also reduces friction between the parts of stator core 132 and moving rotor core 126.

Metal windings 134a,b,c may be formed of aluminium or copper wire, in one example. The wire may be insulated along its length to prevent short circuit connections between the windings. The windings may be held in place by a mount and may be wound directly on the mount or may be formed separately as a bobbin or winding on a mandrel.

A conical air gap 160 is defined between the conical rotor 120 and the conical stator 130 to have a substantially consistent height or distance 162 between an inner surface of stator core 132 and an inner surface of squirrel cage 122, as shown by the double-sided arrow. Conical air gap 160 is illustrated to have substantially the same height from the shaft 110 to the outer edges of the conical rotor 120 and conical stator 130, but in other embodiments, the height 162 of conical air gap 160 may not be the same but may have a different length between shaft 110 and the outer edges of stator core 132. In one example, the air gap 160 has a distance 162 between the conical rotor and the conical stator between about 1 mm and about 3 mm. In accordance with the present invention, the air gap distance may be controlled in some embodiments by the mounting location of roller bearing 124 within rotor core 126 along surrounding wall 129. Conical stator 130 is then operably coupled to the roller bearing 124 at an air gap distance from squirrel cage 122. Advantageously, the air gap distance 162 between the conical rotor and conical stator can be controlled by the mounting position of the roller bearing within rotor core 126.

The conical rotor 120 and the conical stator 130 are operably coupled to shaft 110 to be concentric about the lengthwise axis 118 of the shaft 110. In other words, after conical rotor 120 is assembled, and after conical stator 130 is assembled, the rotor core and the stator core may be placed on the shaft 110. The conical rotor 120 is configured for rotational movement about lengthwise axis 118 of the shaft 110 while the conical stator 130 and shaft 110 are stationary. Conical rotor 120 and conical stator 130 are axially aligned along lengthwise axis 118 of shaft 110. Conical rotor 120 is held in place by a tab or flange at rotor end 114 and bearing 150. In one example, both squirrel cage 122 and interior region 127 of rotor core 126 are held in place by the flange and bearing 150. In other examples, squirrel cage 122 may be mounted onto the interior region 127 and only the interior region 127 of rotor core 126 be held in place by the flange and bearing 150. Conical stator 130 is held in place by wedge 140 and roller bearing 124.

A power supply is operably coupled to the metal windings 134a,b,c for providing electric current to the metal windings to generate a magnetic field for interaction with conical rotor 120 (and squirrel cage 122).

A cover may be mounted or placed over the assembled conical rotor 120 and the conical stator 130 to protect against dust, water, and/or other potential environmental contaminants. The cover may be made from aluminium, plastic, or steel, in one example.

In operation, an electric current is provided to the metal windings in the conical stator, thereby producing a radiaxial magnetic flux between the conical stator 130 and the conical rotor 120. A torque force is then provided on the conical rotor 120 to thereby rotate the conical rotor 120. A vehicle tire may be coupled to the conical rotor to thereby rotate the vehicle tire. The metal windings 134a, 134b, 134c in the stator core 132 of a radiaxial flux motor 100 sets up a rotating magnetic field through the conical rotor 120, including squirrel cage 122 and rotor core 126. The relative motion between this magnetic field and the conical rotor 120 induces electric current in squirrel cage 122. In turn, these currents lengthwise in the conductors of stator metal windings 134a, 134b, 134c react with the magnetic field of the motor to produce force acting at a tangent orthogonal to the rotor core 126 resulting in torque to turn rotor 120.

The substantially parallel and concentric conical geometry of the rotor 120 and stator 130 combines the radial flux vector and the axial flux vector to improve control and power, and further maximizes the radial space available to increase the moment arm to increase available torque at the drive shaft of the motor. Furthermore, the present invention provides for increased efficiency, torque-speed, and improved space utilization for a motor.

In one example, each of the conical rotor 120 and the conical stator 130 has a base between about 200 mm to about 750 mm. In another example, each of the conical rotor 120 and the conical stator 130 has a height between about 145 mm and about 325 mm. In yet another example, each of the conical rotor 120 and the conical stator 130 has a conical geometry with a ratio of base to height between about 1.3 and about 2.4. In yet another example, interior region 127 of rotor core 126 and squirrel cage 122 each have a conical geometry with a ratio of base to height between about 1.3 and about 2.4.

In accordance with the embodiments illustrated in FIGS. 1-3, the conical rotor 120 and the conical stator 130 are each tapered toward the fixed end 116 of shaft 110. As another description, the conical tapered surface of interior region 127 and squirrel cage 122 of rotor 120 and stator 130 are directed toward or angled toward the fixed end 116 of shaft 110 (i.e., the apex of the conical geometry is directed toward fixed end 116 of shaft 110). As yet another description, the rotor core 126 may be described as concave ("curving inward") and stator core 132 may be described as convex ("curving outward").

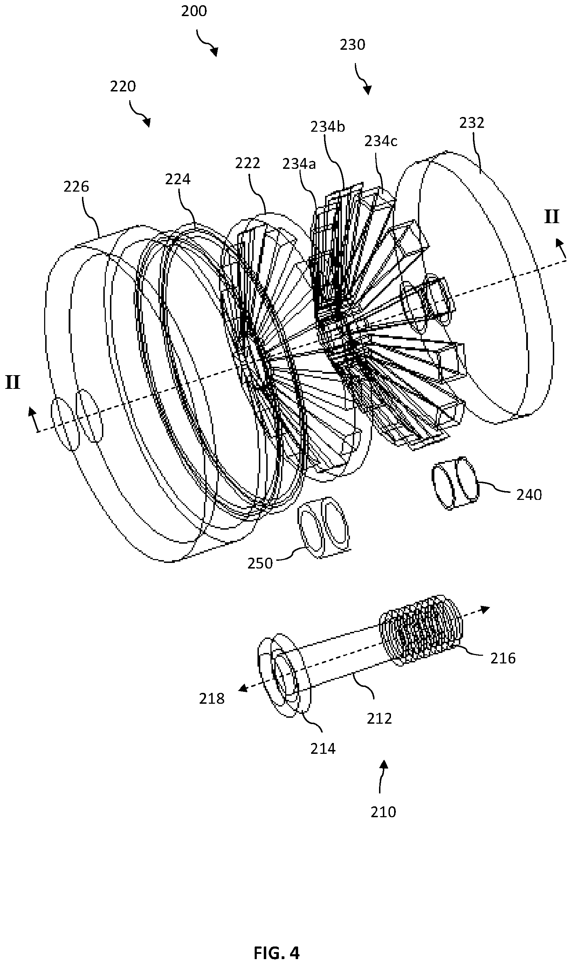

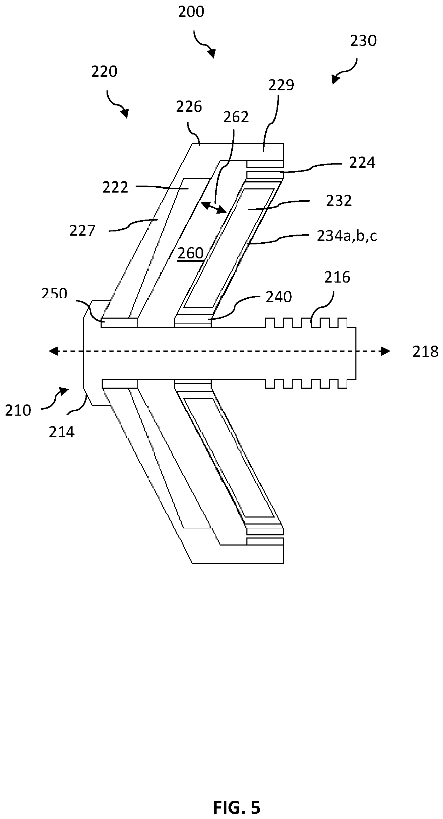

In other embodiments, as illustrated with respect to FIGS. 4-5, the conical tapered walls of a conical rotor and a conical stator are each tapered toward the rotor end of a shaft instead of toward the fixed end. FIG. 4 illustrates an assembly view of an electric motor 200 according to other embodiments of the present invention, and FIG. 5 illustrates a sectional side view along line II - II of the electric motor 200 of FIG. 4 according to an embodiment of the present invention. It is noted that similarly named and numbered components as described above with respect to FIGS. 1-3 have similar structure and functions as described above except for orientation and/or the direction of conical taper.

According to an embodiment, electric motor 200 includes shaft 210 having a shaft portion 212, a rotor end 214, and a fixed end 216. Generally, shaft 210 is tubular in shape with a circular cross section and has an axis of rotation 218 which runs centrally lengthwise along the shaft. Shaft 210 allows for joining of the fixed end 216 to a powertrain and a rotational axis for conical rotor 220 to rotate about. In one example, rotor 220 rotates adjacent to or approximate to rotor end 214, which includes a tab or flange in one example, for maintaining a position of the rotor 220. In a further example, fixed end 216 of shaft 210 includes screw threads for fixedly attaching to a powertrain component, such as a transmission, a drive shaft, and/or a differential. Other means for operably coupling the fixed end 216 to a powertrain component are within the scope of the present invention. Shaft 210 may be produced at least in part by machining, in one example. Shaft 210 may be comprised of steel, in one example.

Conical rotor 220 is coupled to shaft 210 adjacent the rotor end 214, the conical rotor 220 including a squirrel cage 222, a roller bearing 224, and rotor core 226. Squirrel cage 222 may be produced at least in part by machining and rolling, in one example, and is comprised of aluminium or copper, in one example. The squirrel cage 222 may then be placed on rotor core 226. Squirrel cage 222 allows for rotational motion of rotor core 226. Roller bearing 224 is placed inside the rotor core 226, in one example, and is used for operably mounting a conical stator 230.

Rotor core 226 includes a conical interior region 227 and a surrounding wall 229, the surrounding wall 229 for mounting the roller bearing 224. Rotor core 226 allows for the flow of magnetic flux. Rotor core 226 may be produced at least in part by laser cutting and pressing, in one example. Rotor core 226 may be comprised of steel or silicon steel, in one example.

Rotor core 226 is coupled to the shaft 210 by a bearing 250. In one example, the bearing 250 is generally tubular in shape for coupling to the shaft 210 and for constraining relative motion of the rotor core 226 to a desired motion. Bearing 250 also reduces friction between moving parts.

Conical stator 230 is fixedly coupled to the shaft 210 between the conical rotor 220 and the fixed end 216. Conical stator 230 is operably coupled to the conical rotor 220 by roller bearing 224. Conical stator 230 is operably coupled to shaft 210 by a wedge 240, which is generally tubular in shape in one example, and is comprised of steel or plastic, in one example. Wedge 240 may be placed in between shaft 210 and a stator core, in one example. The conical stator 230 includes a stator core 232 which allows the flow of magnetic flux, and metal windings 234a, 234b, 234c (also referred to as 234a,b,c) for flow of an electric current. Metal windings 234a,b,c are wound on stator core 232 by a coil winding machine or manually, in one example. Metal windings 234a,b,c may be formed of aluminium or copper in one example. Stator core 232 may be produced at least in part by laser cutting and pressing, in one example, and may be comprised of steel or silicon steel, in one example. Roller bearing 224 constrains relative motion to the desired motion of the stator metal windings and also reduces friction between moving parts.

A conical air gap 260 is defined between the conical rotor 220 and the conical stator 230 to have a height or distance 262 between an inner surface of stator core 232 and an inner surface of squirrel cage 222, as shown by the double-sided arrow. Conical air gap 260 is illustrated to have substantially the same distance 262 from the shaft 210 to the outer edges (or surrounding wall 229) of the conical rotor 220 and conical stator 230, but in other embodiments, the height 262 of conical air gap 260 may not be the same but may have a different length between shaft 210 and the outer edges of conical rotor 220 and stator core 232. In one example, the air gap distance 262 between the conical rotor and the conical stator is between about 1 mm and about 3 mm.

The conical rotor 220 and the conical stator 230 are operably coupled to shaft 210 to be concentric about the lengthwise axis 218 of the shaft 210. In other words, after conical rotor 220 is assembled, and after conical stator 230 is assembled, the rotor core and the stator core may be placed on the shaft 210. The conical rotor 220 is configured for rotational movement about lengthwise axis 218 of the shaft 210 while the conical stator 230 and shaft 210 are stationary.

A power supply is operably coupled to the metal windings for providing electric current to the metal windings to generate a magnetic field for interaction with conical rotor 220.

A cover may be mounted or placed over the assembled conical rotor 220 and the conical stator 230 to protect against dust, water, and/or other potential environmental contaminants. The cover may be made from aluminium, plastic, or steel, in one example.

The metal windings 234a, 234b, 234c in the stator core 232 of a radiaxial flux motor 200 sets up a rotating magnetic field through the conical rotor 220, including squirrel cage 222 and rotor core 226, using a power supply providing current to the metal windings. The relative motion between this magnetic field and the rotor core 226 induces electric current in squirrel cage 222 and its conductors or windings. In turn, these currents lengthwise in the conductors of stator metal windings 234a, 234b, 234c react with the magnetic field of the motor to produce force acting at a tangent orthogonal to the rotor core 226 resulting in torque to turn the rotor 220.

The substantially parallel conical geometry of the rotor 220 and stator 230 combines the radial flux vector and the axial flux vector to improve control and power, and further maximizes the radial space available to increase the moment arm to increase available torque at the drive shaft of the motor. Furthermore, the present invention provides for increased efficiency, torque-speed, and improved space utilization for a motor. In one example, each of the conical rotor 220 and the conical stator 230 has a conical geometry with a ratio of base to height between about 1.3 and about 2.4. In another example, interior region 227 of rotor core 226 and squirrel cage 222 each have a conical geometry with a ratio of base to height between about 1.3 and about 2.4.

Electric motor 200 is similar to electric motor 100 described above with respect to FIGS. 1-3, but in this embodiment described above with respect to FIGS. 4-5, the conical rotor 220 and the conical stator 230 are each tapered toward the rotor end 214 of shaft 210. As another description, the conical tapered walls of rotor core 226 and stator core 232 are directed toward or angled toward the rotor end 214 of shaft 210. As yet another description, the rotor core 226 may be described as convex ("curving outward") and stator core 232 may be described as concave ("curving inward").

In other alternative embodiments, instead of a squirrel cage, a conical rotor may include a plurality of magnets, including but not limited to permanent magnets or electro magnets positioned and oriented to form a magnetic pole on the conical rotor. It is noted that the conical shape of the radiaxial flux motors 100 and 200 described above can also be applied for a synchronous motor. For example, instead of a squirrel cage, a plurality of magnets can be used and a synchronous motor can be obtained. In the same way, for this synchronous motor, both power efficiency and basic control can be improved.

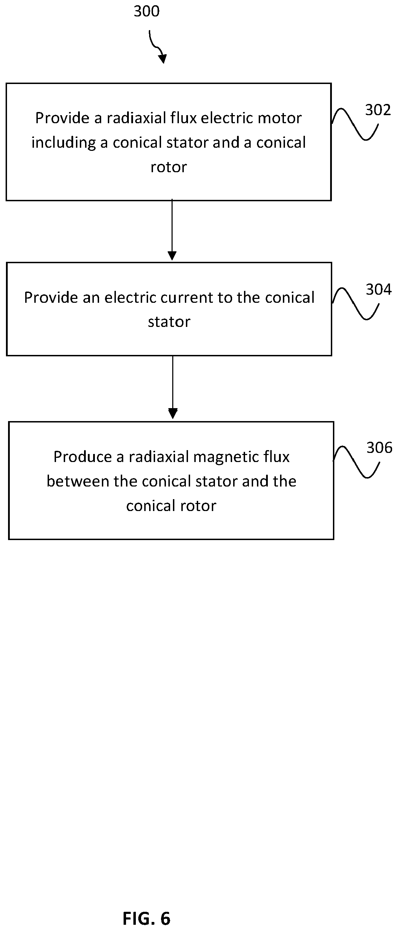

Referring now to FIG. 6, a flowchart is shown of a method 300 for operating a radiaxial electric motor according to an embodiment of the present invention. Method 300 for operating an electric motor includes providing a radiaxial electric motor as described above at step 302. The radiaxial flux electric motor includes a shaft having a rotor end and a fixed end, and a conical rotor rotatably coupled to the shaft adjacent the rotor end, the conical rotor including one of a squirrel cage or a plurality of magnets. The motor further includes a conical stator coupled to the shaft between the conical rotor and the fixed end and coupled to the conical rotor by a roller bearing, the conical stator including metal windings for flow of an electric current, wherein the conical rotor is configured for rotational movement about a lengthwise axis of the shaft while the conical stator and the shaft are stationary. A conical air gap is defined between the conical rotor and the conical stator. Method 300 further includes providing an electric current to the metal windings in the conical stator at step 304, and producing a radiaxial magnetic flux between the conical stator and the conical rotor at step 306.

In additional embodiments, method 300 may further include providing a torque force on the conical rotor to thereby rotate the conical rotor. In one example, a vehicle tire may be coupled to the conical rotor and the tire may be rotatably moved as the conical rotor is rotated.

Although the invention has been described in detail in connection with only a limited number of embodiments, it should be readily understood that the invention is not limited to such disclosed embodiments. Rather, the invention can be modified to incorporate a number of variations, alterations, substitutions, combinations or equivalent arrangements not heretofore described, but which are commensurate with the scope of the claims.

Furthermore, the various components that make up the electric motor and methods disclosed above can be alternatives which may be combined in various applicable and functioning combinations within the scope of the present invention. Additionally, while various embodiments of the invention have been described, it is to be understood that aspects of the invention may include only some of the described embodiments. Accordingly, the invention is not to be seen as limited by the foregoing description but is only limited by the scope of the appended claims.

## Claims

1. A radiaxial flux electric motor (100), comprising:
a shaft (110) having a rotor end (114) and a fixed end (116);
a conical rotor (120) rotatably coupled to the shaft (110) adjacent the rotor end (114),
a conical stator (130) coupled to the shaft (110) between the conical rotor (120) and the fixed end (116), with a substantially parallel and concentric conical geometry of the rotor (120) and the stator (130), wherein
the conical rotor (120) includes a roller bearing (124), a rotor core (126) and one of a squirrel cage (122) or a plurality of magnets, wherein the rotor core (126) includes a conical interior region (127) with a base adjacent to the shaft (110) and radially outwards a base of a cylindrical surrounding wall (129) extending in the axial direction such that a top portion of the surrounding wall (129) surrounds the stator (130), wherein the top portion mounts the roller bearing (124) the conical stator (130) is operably coupled to the conical rotor (120) by roller bearing (124) along the surrounding wall (129)the conical stator (130) including metal windings (134a, 134b, 134c) for flow of an electric current, wherein the conical rotor (120) is configured for rotational movement about a lengthwise axis (118) of the shaft (110) while the conical stator (130) and the shaft (110) are stationary with a conical air gap (160) allowed by surrounding wall (129) between the conical rotor (120) and the conical stator (130); wherein by the conical geometry of the stator (130) and the rotor (120) a radiaxial flux comprising both radial flux and axial flux simultaneously is provided between the conical stator (130) and the conical rotor (120), when electrical current is provided to said metal windings (134a, 134b, 134c).

2. The electric motor (100) according to claim 1, wherein the conical rotor (120) is rotatably coupled to the shaft (110) by a bearing (150), and wherein the conical stator (130) is coupled to the shaft (110) by a wedge (140).

3. The electric motor (100) according to any one of claims 1 or 2, wherein the bearing (150) and the wedge (140) are each generally tubular in shape for coupling to the shaft (110).

4. The electric motor (100) according to any one of claims 1 to 3, wherein the fixed end (116) includes screw threads for coupling to a power train including a transmission, drive shafts, and differentials.

5. The electric motor (100) according to any one of claims 1 to 4, wherein the conical rotor (120) and the conical stator (130) are each tapered toward the fixed end (116).

6. The electric motor (100) according to any one of claims 1 to 4, wherein the conical rotor (120) and the conical stator (130) are each tapered toward the rotor end (116).

7. The electric motor according to any one of claims 1 to 6, wherein the conical rotor (120) and the conical stator (130) are concentric about the lengthwise axis (118) of the shaft (110).

8. The electric motor (100) according to any one of claims 1 to 7, wherein the air gap distance (160) between the conical rotor (120) and the conical stator (130) is between about 1 mm and about 3 mm.

9. The electric motor (100) according to any one of claims 1 to 8, wherein each of the conical rotor (120) and the conical stator (130) has a base between about 200 mm to about 750 mm.

10. The electric motor (100) according to any one of claims 1 to 9, wherein each of the conical rotor (120) and the conical stator (130) has a height between about 145 mm and about 325 mm.

11. The electric motor (100) according to any one of claims 1 to 10, wherein each of the conical rotor (120) and the conical stator (130) has a ratio of base to height between about 1.3 and about 2.4.

12. The electric motor (100) according to any one of claims 1 to 11, further comprising a cover over the conical rotor (120) and the conical stator (130).

13. The electric motor (100) according to any one of claims 1 to 12, further comprising a power supply operably coupled to the metal windings (134a, 134b, 134c) for providing the electric current.

14. An electric vehicle including the electric motor (100) according to any one of claims 1 to 13, wherein the fixed end (116) of the shaft (110) is operably coupled to at least one powertrain component of the electric vehicle.

15. The electric vehicle of claim 14, wherein the conical rotor (120) is coupled to a tire.

16. A method for operating a radiaxial flux electric motor (100) according to one of the claims 1 to 15, the method comprising:
providing an electric current to the metal windings (134a, 134b, 134c) in the conical stator (130); and
producing a radiaxial magnetic flux comprising both radial flux and axial flux simultaneously between the conical stator (120) and the conical rotor (130) for providing a torque force on the conical rotor (120) to thereby rotate the conical rotor (120).

17. The method according to claim 16, further comprising rotatably moving a tire coupled to the conical rotor (120).

## Patentansprüche

1. Radiaxialfluss-Elektromotor (100), aufweisend:
eine Welle (110) mit einem Rotorende (114) und einem festen Ende (116);
einen konischen Rotor (120), der drehbar mit der Welle (110) neben dem Rotorende (114) verbunden ist,
einen konischen Stator (130), der zwischen dem konischen Rotor (120) und dem festen Ende (116) mit der Welle (110) verbunden ist,
wobei der Rotor (120) und der Stator (130) eine im Wesentlichen parallele und konzentrische konische Geometrie aufweisen, wobei
der konische Rotor (120) beinhaltet:
ein Walzlager (124), einen Rotorkern (126) und eines von einem Käfigläufer (122) oder einer Mehrzahl an Magneten, wobei der Rotorkern (126) einen konischen Innenbereich (127) mit einem Sockel neben der Welle (110) und radial außerhalb einen Sockel einer zylindrischen Umgebungswand (129) beinhaltet, die in der axialen Richtung verläuft, so dass ein oberen Abschnitt der Umgebungswand (129) den Stator (130) umgibt, wobei der obere Abschnitt das Walzlager (124) befestigt, wobei der konische Stator (130) betreibbar mit dem konischen Rotor (120) durch das Walzlager (124) entlang der Umgebungswand (129) verbunden ist, wobei der konische Stator (130) Metallwicklungen (134a, 134b, 134c) für den Fluss elektrischen Stroms beinhaltet, wobei der konische Rotor (120) für eine Drehbewegung um eine Längsachse (118) der Welle (110) konfiguriert ist, während der konische Stator (130) und die Welle (110) ortsfest sind, wobei eine konische Luftspalte (160) von der Umgebungswand (129) zwischen dem konischen Rotor (120) und dem konischen Stator (130) freigelassen wird; wobei durch die konische Geometrie des Stators (130) und des Rotors (120) ein radiaxialer Fluss, der sowohl radialen Fluss, als auch axialen Fluss aufweist, gleichzeitig zwischen dem konischen Stator (130) und dem konischen Rotor (120) vorhanden ist, wenn den Metallwicklungen (134a, 134b, 134c) elektrischer Strom zugeführt wird.

2. Elektromotor (100) nach Anspruch 1, wobei der konische Rotor (120) durch ein Lager (150) drehbar mit der Welle (110) verbunden ist, und wobei der konische Stator (130) durch einen Keil (140) mit der Welle (110) verbunden ist.

3. Elektromotor (100) nach einem der Ansprüche 1 oder 2, wobei das Lager (150) und der Keil (140) jeweils im Wesentlichen eine Röhrenform aufweisen, um eine Verbindung mit der Welle (110) herzustellen.

4. Elektromotor (100) nach einem der Ansprüche 1 bis 3, wobei das feste Ende (116) Schraubengewinde beinhaltet, um eine Verbindung mit einem Antriebsstrang herzustellen, der ein Getriebe, Antriebswellen und Differentiale beinhaltet.

5. Elektromotor (100) nach einem der Ansprüche 1 bis 4, wobei der konische Rotor (120) und der konische Stator (130) jeweils in Richtung des festen Endes (116) zugespitzt sind.

6. Elektromotor (100) nach einem der Ansprüche 1 bis 4, wobei der konische Rotor (120) und der konische Stator (130) jeweils in Richtung des Rotorendes (116) zugespitzt sind.

7. Elektromotor (100) nach einem der Ansprüche 1 bis 6, wobei der konische Rotor (120) und der konische Stator (130) um die Längsachse (118) der Welle (110) herum konzentrisch sind.

8. Elektromotor (100) nach einem der Ansprüche 1 bis 7, wobei die Luftspaltenentfernung (160) zwischen dem konischen Rotor (120) und dem konischen Stator (130) zwischen ungefähr 1 mm und ungefähr 3 mm beträgt.

9. Elektromotor (100) nach einem der Ansprüche 1 bis 8, wobei sowohl der konische Rotor (120), als auch der konische Stator (130) einen Sockel zwischen ungefähr 200 mm bis ungefähr 750 mm aufweisen.

10. Elektromotor (100) nach einem der Ansprüche 1 bis 9, wobei sowohl der konische Rotor (120), als auch der konische Stator (130) eine Höhe zwischen ungefähr 145 mm und ungefähr 325 mm aufweisen.

11. Elektromotor (100) nach einem der Ansprüche 1 bis 10, wobei sowohl der konische Rotor (120), als auch der konische Stator (130) ein Verhältnis des Sockels zur Höhe zwischen ungefähr 1,3 und ungefähr 2,4 aufweisen.

12. Elektromotor (100) nach einem der Ansprüche 1 bis 11, ferner aufweisend eine Abdeckung über dem konischen Rotor (120) und dem konischen Stator (130).

13. Elektromotor (100) nach einem der Ansprüche 1 bis 12, ferner aufweisend eine Leistungszufuhr, die betreibbar mit den Metallwicklungen (134a, 134b, 134c) verbunden ist, um den elektrischen Strom zuzuführen.

14. Elektrofahrzeug, beinhaltend den Elektromotor (100) nach einem der Ansprüche 1 bis 13, wobei das feste Ende (116) der Welle (110) betreibbar mit zumindest einer Antriebsstrangkomponente des Elektrofahrzeugs verbunden ist.

15. Elektrofahrzeug nach Anspruch 14, wobei der konische Rotor (120) mit einem Reifen verbunden ist.

16. Verfahren zum Betreiben eines Radiaxialfluss-Elektromotors (100) nach einem der Ansprüche 1 bis 15, wobei das Verfahren aufweist:
Zuführen eines elektrischen Stroms zu den Metallwicklungen (134a, 134b, 134c) in dem konischen Stator (130); und
Herstellen eines radialaxialen magnetischen Flusses, der gleichzeitig sowohl radialen Fluss, als auch axialen Fluss aufweist, zwischen dem konischen Stator (120) und dem konischen Rotor (130), um eine Drehmomentkraft an den konischen Rotor (120) anzulegen, um dadurch den konischen Rotor (120) zu drehen.

17. Verfahren nach Anspruch 16, ferner aufweisend ein drehendes Bewegen eines Reifens, der mit dem konischen Rotor (120) verbunden ist.

## Revendications

1. - Moteur électrique à flux radiaxial (100), comprenant :
un arbre (110) ayant une extrémité de rotor (114) et une extrémité fixe (116) ;
un rotor conique (120) couplé de manière rotative à l'arbre (110) adjacent à l'extrémité de rotor (114) ;
un stator conique (130) couplé à l'arbre (110) entre le rotor conique (120) et l'extrémité fixe (116), avec une géométrie conique sensiblement parallèle et concentrique du rotor (120) et du stator (130),
le rotor conique (120) comprenant un roulement à rouleaux (124), un noyau de rotor (126) et l'un d'une cage d'écureuil (122) ou d'une pluralité d'aimants, le noyau de rotor (126) comprenant une région intérieure conique (127) avec une base adjacente à l'arbre (110) et, radialement vers l'extérieur, une base d'une paroi périphérique cylindrique (129) s'étendant dans la direction axiale de telle sorte qu'une partie supérieure de la paroi périphérique (129) entoure le stator (130), la partie supérieure montant le roulement à rouleaux (124),
le stator conique (130) étant couplé de manière fonctionnelle au rotor conique (120) par le roulement à rouleaux (124) le long de la paroi périphérique (129), le stator conique (130) comprenant des enroulements métalliques (134a, 134b, 134c) pour la circulation d'un courant électrique, le rotor conique (120) étant configuré pour un mouvement de rotation autour d'un axe longitudinal (118) de l'arbre (110) tandis que le stator conique (130) et l'arbre (110) sont immobiles avec un entrefer conique (160) permis par la paroi périphérique (129) entre le rotor conique (120) et le stator conique (130) ; grâce à la géométrie conique du stator (130) et du rotor (120), un flux radiaxial comprenant simultanément à la fois un flux radial et un flux axial étant produit entre le stator conique (130) et le rotor conique (120), lorsque du courant électrique est fourni auxdits enroulements métalliques (134a, 134b, 134c).

2. - Moteur électrique (100) selon la revendication 1, dans lequel le rotor conique (120) est couplé de manière rotative à l'arbre (110) par un roulement (150) et le stator conique (130) est couplé à l'arbre (110) par une cale (140).

3. - Moteur électrique (100) selon l'une quelconque des revendications 1 et 2, dans lequel le roulement (150) et la cale (140) sont chacun de forme générale tubulaire pour accouplement à l'arbre (110).

4. - Moteur électrique (100) selon l'une quelconque des revendications 1 à 3, dans lequel l'extrémité fixe (116) comprend des filets pour accouplement à un groupe motopropulseur comprenant une boîte de vitesses, des arbres de transmission et des différentiels.

5. - Moteur électrique (100) selon l'une quelconque des revendications 1 à 4, dans lequel le rotor conique (120) et le stator conique (130) sont chacun effilés en direction de l'extrémité fixe (116).

6. - Moteur électrique (100) selon l'une quelconque des revendications 1 à 4, dans lequel le rotor conique (120) et le stator conique (130) sont chacun effilés en direction de l'extrémité de rotor (116).

7. - Moteur électrique (100) selon l'une quelconque des revendications 1 à 6, dans lequel le rotor conique (120) et le stator conique (130) sont concentriques autour de l'axe longitudinal (118) de l'arbre (110).

8. - Moteur électrique (100) selon l'une quelconque des revendications 1 à 7, dans lequel la distance d'entrefer (160) entre le rotor conique (120) et le stator conique (130) est comprise entre environ 1 mm et environ 3 mm.

9. - Moteur électrique (100) selon l'une quelconque des revendications 1 à 8, dans lequel chacun du rotor conique (120) et du stator conique (130) a une base comprise entre environ 200 mm et environ 750 mm.

10. - Moteur électrique (100) selon l'une quelconque des revendications 1 à 9, dans lequel chacun du rotor conique (120) et du stator conique (130) a une hauteur comprise entre environ 145 mm et environ 325 mm.

11. - Moteur électrique (100) selon l'une quelconque des revendications 1 à 10, dans lequel chacun du rotor conique (120) et du stator conique (130) a un rapport de base à hauteur compris entre environ 1,3 et environ 2,4.

12. - Moteur électrique (100) selon l'une quelconque des revendications 1 à 11, comprenant en outre un élément de recouvrement sur le rotor conique (120) et le stator conique (130).

13. - Moteur électrique (100) selon l'une quelconque des revendications 1 à 12, comprenant en outre une alimentation électrique couplée de manière fonctionnelle aux enroulements métalliques (134a, 134b, 134c) pour fournir le courant électrique.

14. - Véhicule électrique comprenant le moteur électrique (100) selon l'une quelconque des revendications 1 à 13, dans lequel l'extrémité fixe (116) de l'arbre (110) est couplée de manière fonctionnelle à au moins un élément de groupe motopropulseur du véhicule électrique.

15. - Véhicule électrique selon la revendication 14, dans lequel le rotor conique (120) est accouplé à un pneu.

16. - Procédé de fonctionnement d'un moteur électrique à flux radiaxial (100) selon l'une des revendications 1 à 15, le procédé comprenant :
fournir un courant électrique aux enroulements métalliques (134a, 134b, 134c) dans le stator conique (120) ; et
produire un flux magnétique radiaxial comprenant à la fois un flux radial et un flux axial simultanément entre le stator conique (120) et le rotor conique (130) pour fournir une force de couple sur le rotor conique (120) de façon à faire tourner le rotor conique (120).

17. - Procédé selon la revendication 16, comprenant en outre déplacer en rotation un pneu accouplé au rotor conique (120).
